# EUROPÄISCHE PATENTSCHRIFT

(11) **EP 3 057 860 B1**
(45) Veröffentlichungstag und Bekanntmachung des Hinweises auf die Patenterteilung: **28.02.2018**
(21) Anmeldenummer: 14781226.7
(22) Anmeldetag: 08.10.2014
(51) Int. Cl.: B62K 23/04

(54) **VERBESSERTER STEUERGRIFF**
IMPROVED CONTROL GRIP
POIGNÉE DE COMMANDE AMÉLIORÉE

(30) Priorität: 14.10.2013 DE 102013220696
(43) Veröffentlichungstag der Anmeldung: 24.08.2016
(73) Patentinhaber: Bayerische Motoren Werke Aktiengesellschaft, 80809 München (DE)
(72) Erfinder: AUGUSTIN, Stephan, 80638 Muenchen (DE)
(86) Internationale Anmeldenummer: PCT/EP2014/071501
(87) Internationale Veröffentlichungsnummer: WO 2015/055475

(56) Entgegenhaltungen:
- WO-A2-2012/042528
- US-A1- 2009 044 653

## Beschreibung

Die vorliegende Erfindung betrifft einen Steuergriff für ein Fahrzeug, wobei durch ein auf den Steuergriff aufgebrachtes Drehmoment eine Geschwindigkeit und/oder eine Verzögerung eines Fahrzeuges gesteuert werden kann. Ein derartiger Griff wird auch als Gasgriff bezeichnet.

Bei zweirädrigen, dreirädrigen oder vierrädrigen Fahrzeugen, beispielsweise Motorrädern, Trikes, Quads, Motorschlitten und Wasserfahrzeugen, beispielsweise einem Jetski, ist an dem Lenker üblicherweise der so genannte Gasgriff angeordnet, der als Drehgriff ausgebildet ist und der die Leistungsabgabe eines Verbrennungsmotors steuert. Die Leistungsabgabe wird durch eine axiale Drehung des so genannten Gasgriffes bewirkt. Herkömmlich wird die Leistungsabgabe durch einen Seilzug vom Gasgriff zum Vergaser gesteuert. In jüngerer Zeit werden elektrische Gasgriffe eingesetzt, bei denen eine axiale Drehbewegung des Gasgriffes zur Steuerung der Beschleunigung verwendet wird. Das Signal eines derartigen elektrischen Gasgriffs wird an eine elektronische Motorsteuerung übergeben.

Ein axial drehbarer Gasgriff am rechten Lenker zum Beschleunigen von zweirädrigen, dreirädrigen oder vierrädrigen Fahrzeugen und Wasserfahrzeugen hat sich etabliert und die Verwender haben sich an den axial drehbaren Gasgriff gewöhnt.

Gasgriffe des Standes der Technik weisen jedoch Nachteile auf. Beispielsweise besteht keine feste Verbindung zwischen der rechten Hand des Verwenders und dem Lenker des Fahrzeuges. Die Hand kann sich um die im Wesentlichen horizontale Drehachse drehen. Neben diesem axialen Spiel weisen selbst qualitativ hochwertige Gasgriffe ein horizontales Spiel entlang der Drehachse auf. Ferner ist das Handgelenk eines Verwenders je nach Fahrzustand mehr oder weniger abgewinkelt, was die Ergonomie beeinträchtigt. Daher muss der Verwender bei längeren Fahrten umgreifen, um eine entspannte Haltung beim Greifen des Gasgriffs einzunehmen.

Die Nachteile eines Steuergriffs des Standes der Technik sind auch sicherheitsrelevant, da in Abhängigkeit von der Drehstellung des Gasgriffes der Bremshebel nicht mit zwei Fingern gehalten werden kann. Zum Bremsen muss der Gasgriff teilweise gelöst werden, damit der Bremshebel betätigt werden kann. Dabei muss der Gasgriff in seine Leerlaufstellung zurückkehren, damit die Geschwindigkeit abnimmt und das Fahrzeug verzögert wird.

Falls das Vorderrad des Fahrzeuges aufsteigt, beispielsweise bei einem zu starken Beschleunigen, besteht die Gefahr einer darüber hinausgehenden zusätzlichen Beschleunigung, da der Verwender am Gasgriff abrutschen kann und diesen in eine Stellung bewegt, in der noch mehr Motorleistung angefordert wird. Daher besteht die Gefahr, dass das Vorderrad des Fahrzeuges weiter aufsteigt und die Gefährdungssituation eskaliert.

Die Lagerung des Drehgelenkes des Gasgriffs kann während dessen Lebensdauer verschleißen und schwergängig werden. Ferner kann die Verkabelung einer Griffheizung des Gasgriffs durch die vielen Bewegungen brechen und ausfallen.

Je nach gewünschter Beschleunigung ist die Stellung des Gasgriffs aus ergonomischer Sicht ungünstig und unbequem. Beispielsweise kann sich der Verwender beim Bremsen nicht sofort optimal abstützen und nicht die volle Bremsleistung realisieren. Ferner kann in einem unebenen Gelände die rechte Hand unkontrolliert wackeln und ungewollt Beschleunigungsanforderungen ausgeben. Generell hat der Verwender aufgrund der axialen Drehbarkeit des Gasgriffs und des Spiels des Gasgriffs in Längsrichtung keinen sicheren Halt auf dem Lenker.

Die WO 2012/042528 A2, die als nächstliegender Stand der Technik gesehen wird, offenbart einen Steuergriff, der das daran angelegte Drehmoment mittels eines Positionssensors erfasst.

Die Erfindung stellt sich zur Aufgabe, einen Steuergriff für ein Fahrzeug zu schaffen, der einen sicheren Halt des Verwenders auf dem Fahrzeug ermöglicht.

Die Aufgabe der Erfindung wird durch einen Steuergriff nach Anspruch 1 und einen Lenker nach Anspruch 7 sowie ein Landfahrzeug, ein Wasserfahrzeug oder ein Luftfahrzeug nach Anspruch 8 oder 9 gelöst.

Ein Steuergriff, der dazu ausgebildet ist, auf Grundlage eines an den Steuergriff angelegten axialen Drehmomentes die Beschleunigung und/oder die Geschwindigkeit eines Fahrzeuges zu steuern, umfasst einen Greifbereich, der dazu ausgebildet ist, von der Hand eines Verwenders gegriffen zu werden, und einen Anbringungsbereich, der dazu ausgebildet ist, den Greifbereich nicht drehbar an einem Bauteil des Fahrzeuges anzubringen. Die Beschleunigung und/oder die Geschwindigkeit des Fahrzeuges hängen von dem vom Verwender auf den Greifbereich aufgebrachten axialen Drehmoment ab. Der Greifbereich und der Anbringungsbereich sind starr bzw. nicht drehbar miteinander verbunden. Das Bauteil kann ein Lenker sein. Ein Lenker ist üblicherweise ein gebogenes Rohr bzw. eine gebogene Stange. Der Lenker ist am Fahrzeug schwenkbar angebracht und steuert durch seine Winkel gegenüber der Fahrzeuglängsachse die Fahrtrichtung des Fahrzeuges.

Der Ausdruck "axiales Drehmoment" beschreibt beispielsweise, dass ein Drehmoment um die Längsrichtung des Steuergriffs bzw. des Greifbereichs wirkt. Die Längsrichtung kann die Richtung der längeren Erstreckung des Steuergriffs bzw. des Greifbereichs sein. Unter der Annahme, dass der Steuergriff bzw. der Greifbereich im Wesentlichen zylinderförmig ausgebildet ist, kann das axiale Drehmoment um die Höhe des im Wesentlichen zylinderförmigen Steuergriffs bzw. des im Wesentlichen zylinderförmigen Greifbereichs wirken.

An dem Steuergriff kann zumindest ein Messelement angebracht sein, das dazu ausgebildet ist, das von dem Verwender auf den Griffbereich aufgebrachte axiale Drehmoment zu ermitteln. Das Messelement kann eine mechanische Spannung, eine Kraft, ein Drehmoment, eine Verwindung, eine Torsion etc. messen

Der Griffbereich ist gegenüber dem Anbringungsbereich nicht drehbar. Dadurch bleibt der Griffbereich stets in seiner ursprünglichen Stellung, wodurch der Verwender des Fahrzeuges den Steuergriff am Greifbereich immer fest und sicher greifen kann. Das vom Verwender aufgebrachte Drehmoment wird mittels zumindest eines Messelementes, beispielsweise mittels zumindest eines Dehnmessstreifens, ermittelt. Der Ausdruck "axial nicht drehbar" schließt nicht eine Verwindung, Torsion aus, die vom Verwender nicht wahrnehmbar ist. Der Ausdruck "axial nicht drehbar" soll eine axiale Drehung ausschließen, die vom Anwender wahrnehmbar bzw. deutlich wahrnehmbar ist.

Der Ausdruck "axial nicht drehbar" beschreibt beispielsweise, dass keine Drehung um die Längsrichtung des Steuergriffs bzw. des Greifbereich möglich ist. Die Längsrichtung kann die Richtung der längeren Erstreckung des Steuergriffs bzw. des Greifbereichs sein. Unter der Annahme, dass der Steuergriff bzw. der Greifbereich im Wesentlichen zylinderförmig ausgebildet ist, kann das axiale Drehmoment um die Höhe des im Wesentlichen zylinderförmigen Steuergriffs bzw. des im Wesentlichen zylinderförmigen Greifbereichs wirken.

Der Greifbereich und der Anbringungsbereich können integral, d.h. einstückig, ausgebildet sein. Sowohl der Greifbereich als auch der Anbringungsbereich können rohrartig ausgebildet sein.

Das Messelement ist erfindungsgemäß an einem Erfassungsbereich zwischen dem Greifbereich und dem Anbringungsbereich angeordnet. Der Erfassungsbereich weist erfindungsgemäß eine höhere Verformbarkeit als der Greifbereich und der Anbringungsbereich auf. Der Erfassungsbereich kann eine niedrigere Materialstärke als der Greifbereich und/oder der Anbringungsbereich aufweisen. Beispielsweise lässt sich der Erfassungsbereich durch einen dünneren rohrartigen Körper realisieren. Es können auch Öffnungen im Erfassungsbereich vorgesehen sein, um dessen Verformbarkeit zu erhöhen. Es versteht sich, dass der Greifbereich, der Anbringungsbereich und der Erfassungsbereich integral, d.h. einstückig, ausgebildet sein können.

Der Anbringungsbereich kann dazu ausgebildet sein, axial nicht drehbar an einer Lenkeinrichtung des Fahrzeuges angebracht zu werden. Der Steuergriff kann so angebracht sein, dass er nicht um die axiale Achse der Lenkeinrichtung, d.h. des Lenkers, drehbar ist. Der Steuergriff kann um die im Wesentlichen horizontale Achse nicht drehbar angeordnet sein. Es versteht sich, dass die Lenkeinrichtung und somit der Steuergriff um die Lenkachse, d.h. typischerweise um eine im Wesentlichen vertikale Achse, schwenkbar ist.

Dem Steuergriff kann eine Steuerungseinrichtung zugeordnet sein, die dazu ausgebildet ist, die Signale des zumindest einen Messelementes so auszuwerten, dass das von dem Verwender aufgebrachte axiale Drehmoment ermittelt wird. Es versteht sich, dass das zumindest ein Messelement nicht nur das axiale Drehmoment ermittelt, sondern auch andere Kräfte, beispielsweise, Abstützkräfte beim Lenken und Bremsen. Ferner muss die Steuerungseinrichtung Vibrationen filtern, die durch Bodenunebenheiten verursacht werden. Die Steuerungseinrichtung kann eine elektronische Steuerungseinrichtung sein.

Der Steuergriff kann dazu ausgebildet sein, dass durch Aufbringen des axialen Drehmomentes auf den Greifbereich das Fahrzeug beschleunigt und/oder verzögert werden kann. Auf den Greifbereich kann in seiner Ruhestellung, in der kein Drehmoment auf den Greifbereich aufgebracht wird, ein Drehmoment axial in eine erste Richtung und ein Drehmoment axial in eine zweite Richtung, die der ersten Richtung entgegengesetzt ist, aufgebracht werden, wobei das Fahrzeug durch Aufbringen des Drehmomentes in die erste Richtung mittels der Steuerungseinrichtung beschleunigt und das Fahrzeug durch das Aufbringen des Drehmomentes auf den Greifbereich in die zweite Richtung durch die Steuerungseinrichtung verzögert wird.

Die Erfindung betrifft ferner einen Lenker für ein Fahrzeug, wobei der Anbringungsbereich integral, d.h. einstückig, mit dem Lenker des Fahrzeuges ausgebildet ist.

Die Erfindung betrifft ferner ein Landfahrzeug, ein Wasserfahrzeug oder ein Luftfahrzeug mit zumindest einem Antriebsmotor und zumindest einem zuvor beschriebenen Steuergriff, wobei durch Aufbringen des axialen Drehmomentes auf den Griffbereich die Antriebsleistung des Motors gesteuert wird. Der Motor kann ein Verbrennungsmotor oder Elektromotor sein.

Ferner betrifft die Erfindung ein Landfahrzeug, ein Wasserfahrzeug oder ein Luftfahrzeug mit zumindest einer Bremseinrichtung und zumindest einem zuvor beschriebenen Steuergriff oder Lenker, wobei durch Aufbringen des axialen Drehmomentes auf den Griffbereich die Bremsleistung der Bremseinrichtung gesteuert wird. Falls das Fahrzeug durch einen elektrischen Antriebsmotor angetrieben wird, kann eine Bremsfunktion vergleichsweise einfach, beispielsweise durch Rekuperation, realisiert werden.

Die vorliegende Erfindung stellt eine feste, sichere und permanente Verbindung des Fahrers mit dem Fahrzeug sicher, wodurch die Sicherheit erhöht wird. Der erfindungsgemäße Steuergriff weist kein Spiel auf. Es wird permanent die optimale Griffposition bei einem ergonomisch korrekten Handgelenkwinkel eingenommen. Es erübrigt sich ein sicherheitskritisches Umgreifen des Griffs zum Betätigen der Bremse während der Fahrt. Es ist permanent ein sicherer Griffkontakt zum Bremshebel möglich. Der Bremshebel kann schnell und sicher erreicht werden. Beim Bremsen können die Abstützkräfte sicher eingeleitet werden. Es tritt kein zusätzliches Beschleunigen auf, wenn das Vorderrad abhebt. Der erfindungsgemäße Steuergriff weist keine beweglichen Teile auf, wodurch die Zuverlässigkeit erhöht wird, sowie der Verschleiß und die Kosten reduziert werden. Ferner kann eine Funktion des Antriebsmomentes des Antriebsmotors in Abhängigkeit vom axialen Drehmoment auf den Greifbereich individuell an den Fahrstil und das Können des Verwenders sowie den Einsatzbereich angepasst werden.

Die Erfindung wird nun unter Bezugnahme auf die Figur detaillierter beschrieben, die eine nicht einschränkende Ausführungsform der Erfindung zeigt.

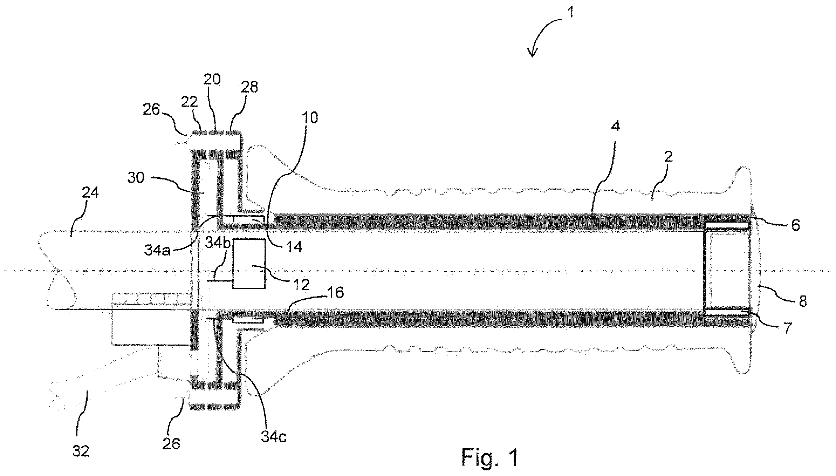

Figur 1 zeigt eine Schnittansicht des erfindungsgemäßen Steuergriffs.

Es wird auf Figur 1 Bezug genommen, die einen Schnitt durch einen Lenker und einen Steuergriff 1 eines Fahrzeuges zeigt. Der Steuergriff 1 umfasst eine Handauflage 2 und ein Griffrohr 4. Die Handauflage 2 und das Griffrohr 4 bilden den Greifbereich. Ein Fahrer des Fahrzeuges, beispielsweise eines Kraftrades, Trikes, Quads, Motorschlitten, Jetski etc., greift mit seiner Hand die Handauflage 2. Die Handauflage 2 ist starr mit dem Griffrohr 4 verbunden. Zum Steuern der Geschwindigkeit bringt der Fahrer ein Drehmoment über den Handauflagebereich 2 auf das Griffrohr 4 auf.

Das Griffrohr 4 ist über einen Erfassungsbereich 10 und einen steuergriffseitigen Anbringungsbereich 20 und einen lenkerseitigen Anbringungsbereich 22 mit einem Lenker 24 des Fahrzeuges starr und nicht drehbar verbunden. Das von dem Fahrer angelegte Drehmoment bewirkt eine Torsion im Griffrohr 4, im Erfassungsbereich 10, in den Anbringungsbereichen 20, 22 sowie im Lenker 24, da der Greifbereich 2, 4 starr mit dem Lenker 24 verbunden ist. Da der Erfassungsbereich 10 dünner ausgebildet ist als das Griffrohr 4, die Anbringungsbereiche 20, 26 und der Lenker 24, tritt die Verformung aufgrund der Torsion hauptsächlich oder in einem größeren Ausmaß im Griffbereich 10 auf. Im Erfassungsbereich 10 sind eine Mehrzahl von Messelemente, beispielsweise Dehnungsmessstreifen, 12, 14, 16, angeordnet, die eine mechanische Spannung im Erfassungsbereich 10 aufgrund der Torsion durch das durch den Fahrer am Greifbereich 2, 4 angelegte Drehmoment erfassen. Eine Steuerungseinrichtung bzw. Auswerteeinrichtung 30 erfasst die Signale der Dehnungsmessstreifen 12, 14, 16 über Leitungen 34a, 34b, 34c. Auf der Rückseite des Erfassungsbereichs 10 ist ein vierter Dehnungsmessstreifen (nicht gezeigt) angeordnet, der mit der Steuerungseinrichtung 30 elektrisch verbunden ist.

Die Steuerungseinrichtung 30 wertet die Messergebnisse der Dehnungsmessstreifen 12, 14, 16 aus und eliminiert Abstützkräfte des Fahrers aufgrund seiner Masse auf das Griffrohr 4, die Abstützkräfte des Fahrers auf das Griffrohr 4 aufgrund des Abbremsens, Vibrationen aufgrund unebenen Geländes und dergleichen. Die Steuerungseinrichtung 30 ermittelt nach Elimination der zuvor genannten Störgrößen das vom Fahrer an den Greifbereich 2, 4 angelegte Drehmoment. Dieses Signal gibt die Steuerungseinrichtung 30 über ein Kabel 32 an eine Motorsteuerung (nicht gezeigt) aus.

Die Dehnungsmessstreifen 12, 14, 16 sind mittels einer rotationssymmetrischen Kappe 28 vor Umwelteinflüssen geschützt. Schrauben 26 verbinden die Anbringungsbereiche 20, 22 und die Kappe 28 starr miteinander. In das Griffrohr 4 wird ein Stopfen 8 eingeführt, um den Steuergriff 1 und den Lenker 24 abzudichten.

Das Griffrohr 4 weist einen dünneren Bereich 6 auf, auf dem eine Lagerhülse 7 angebracht ist, die die Handauflage 2 stützt. Die Lagerhülse 7 ermöglicht eine Verwindung des Griffrohrs 4 gegenüber dem Lenker 24. Die Lagerhülse 7 nimmt auch Abstützkräfte des Fahrers auf.

Es versteht sich, dass die Anbringungsbereiche 20, 22 nicht notwendigerweise erforderlich sind. Der Lenker 24 kann integral mit dem Griffbereich 4 ausgebildet sein.

Die vorliegende Erfindung weist den Vorteil auf, dass der Greifbereich 2, 4 nicht drehbar ist. Dadurch hat der Fahrer immer einen stabilen Halt am Steuergriff 1 und am Lenker 24. Zum einen wird durch diese Maßnahme der Komfort erhöht, weil der Fahrer beim Beschleunigen und Bremsen nicht umgreifen muss. Ferner wird die Sicherheit erhöht, weil der Fahrer immer aus einer definierten und konstanten Handgelenkstellung an den Bremsgriff greifen kann.

Der Ausdruck "starr verbunden", der Ausdruck "nicht drehbar" und der Ausdruck " axial nicht drehbar" sind aus der Sicht des Fahrers zu verstehen. Durch das vom Fahrer auf den Greifbereich 2, 4 aufgebrachte Drehmoment findet lediglich eine nicht oder kaum durch den Fahrer feststellbare Torsion statt, die beispielsweise im Erfassungsbereich 10 erfasst wird.

Die Erfindung weist ferner den Vorteil auf, dass keine beweglichen Teile vorhanden sind, wodurch die Lebensdauer des Steuergriffs erhöht wird. Ferner kann auf den Steuergriff von seiner Ruhestellung aus, in der kein Drehmoment aufgebracht wird, ein Drehmoment axial in beiden Richtungen aufgebracht werden, wodurch eine Beschleunigung und eine Verzögerung, beispielsweise durch Rekuperation, gesteuert werden können.

## Patentansprüche

1. Steuergriff (1), der dazu ausgebildet ist, auf Grundlage eines an den Steuergriff angelegten axialen Drehmomentes die Beschleunigung und/oder die Geschwindigkeit eines Fahrzeuges zu steuern, mit
- einem Greifbereich (2, 4), der dazu ausgebildet ist, von der Hand eines Verwenders gegriffen zu werden, und
- einem Anbringungsbereich (22), der dazu ausgebildet ist, den Greifbereich (2, 4) axial nicht drehbar an einem Bauteil des Fahrzeuges anzubringen,
wobei die Beschleunigung und/oder eine Geschwindigkeit des Fahrzeuges von dem vom Verwender auf den Greifbereich aufgebrachten axialen Drehmoment abhängen,
wobei der Greifbereich (2, 4) und der Anbringungsbereich (22) starr miteinander verbunden sind und der Steuergriff (1) zumindest ein Messelement (12, 14, 16) aufweist, das dazu ausgebildet ist, das von dem Verwender auf den Griffbereich (2, 4) aufgebrachte axiale Drehmoment zu ermitteln,
**dadurch gekennzeichnet, dass** das Messelement (12, 14, 16) an einem Erfassungsbereich (10) zwischen dem Greifbereich (2, 4) und dem Anbringungsbereich (22) angeordnet ist, wobei der Erfassungsbereich (10) eine höhere Verformbarkeit als der Greifbereich (2, 4) und der Anbringungsbereich (22) aufweist.

2. Steuergriff (1) nach Anspruch 1, **dadurch gekennzeichnet, dass** das Messelement einen Dehnmessstreifen (12, 14, 16) aufweist.

3. Steuergriff (1) nach Anspruch 2, **dadurch gekennzeichnet, dass** der Erfassungsbereich (10) eine niedrigere Materialstärke als der Greifbereich (2, 4) und/oder der Anbringungsbereich (22) aufweist.

4. Steuergriff (1) nach einem der vorangegangenen Ansprüche, **dadurch gekennzeichnet, dass** der Anbringungsbereich (22) dazu ausgebildet ist, axial nicht drehbar an einer Lenkeinrichtung (24) des Fahrzeuges angebracht zu werden.

5. Steuergriff (1) nach einem der Ansprüche 1 bis 4, **dadurch gekennzeichnet, dass** dem Steuergriff (1) eine Steuerungseinrichtung (30) zugeordnet ist, die dazu ausgebildet ist, die Signale des zumindest einen Messelementes (12, 14, 16) so auszuwerten, dass das vom Verwender aufgebrachte axiale Drehmoment ermittelt wird.

6. Steuergriff (1) nach einem der Ansprüche 1 bis 5, **dadurch gekennzeichnet, dass** auf der Greifbereich (2, 4) in seiner Ruhestellung, in der kein Drehmoment auf den Greifbereich (2, 4) aufgebracht wird, ein Drehmoment axial in eine erste Richtung und ein Drehmoment axial in eine zweite Richtung, die der ersten Richtung entgegengesetzt ist, aufgebracht werden kann, wobei das Fahrzeug durch Aufbringen des Drehmomentes in die erste Richtung beschleunigt und das Fahrzeug durch das Aufbringen des Drehmomentes auf den Greifbereich (2, 4) in die zweite Richtung verzögert wird.

7. Lenker für ein Fahrzeug mit einem Steuergriff nach einem der Ansprüche 1 bis 6, wobei der Anbringungsbereich (22) integral mit dem Lenker (24) des Fahrzeuges ausgebildet ist.

8. Landfahrzeug, Wasserfahrzeug oder Luftfahrzeug mit zumindest einem Antriebsmotor und zumindest einem Steuergriff (1) nach einem der Ansprüche 1 bis 6 und/oder einen Lenker nach Anspruch 7, wobei durch Aufbringen des axialen Drehmomentes auf den Griffbereich die Antriebsleistung des Motors gesteuert wird.

9. Landfahrzeug, Wasserfahrzeug oder Luftfahrzeug mit zumindest einer Bremseinrichtung und zumindest einem Steuergriff (1) nach einem der Ansprüche 1 bis 6 und/oder einem Lenker nach Anspruch 7, wobei durch Aufbringen des axialen Drehmomentes auf den Griffbereich die Bremsleistung der Bremseinrichtung und/oder eine Rekupertion gesteuert werden.

## Claims

1. A control grip (1) which is designed to control the acceleration and/or the speed of a vehicle on the basis of an axial torque applied to the control grip, having
- a gripping region (2, 4) which is designed to be gripped by the hand of a user, and
- an attachment region (22) which is designed to attach the gripping region (2, 4) in an axially non-rotatable manner to a component of the vehicle,
wherein the acceleration and/or a speed of the vehicle depend(s) on the axial torque applied to the gripping region by the user,
wherein the gripping region (2, 4) and the attachment region (22) are rigidly connected together and the control grip (1) has at least one measuring element (12, 14, 16) which is designed to ascertain the axial torque applied by the user to the grip region (2, 4),
**characterised in that** the measuring element (12, 14, 16) is arranged on a detection region (10) between the gripping region (2, 4) and the attachment region (22), the detection region (10) having greater deformability than the gripping region (2, 4) and the attachment region (22).

2. A control grip (1) according to Claim 1, **characterised in that** the measuring element has a strain gauge (12, 14, 16).

3. A control grip (1) according to Claim 2, **characterised in that** the detection region (10) has a lesser material thickness than the gripping region (2, 4) and/or the attachment region (22).

4. A control grip (1) according to one of the preceding claims, **characterised in that** the attachment region (22) is designed to be attached in an axially non-rotatable manner to a steering means (24) of the vehicle.

5. A control grip (1) according to one of Claims 1 to 4, **characterised in that** a control means (30) is associated with the control grip (1), which means is designed to evaluate the signals of the at least one measuring element (12, 14, 16) such that the axial torque applied by the user is ascertained.

6. A control grip (1) according to one of Claims 1 to 5, **characterised in that** a torque can be applied axially in a first direction, and a torque can be applied axially in a second direction which is opposed to the first direction, to the gripping region (2, 4) in its normal position, in which no torque is applied to the gripping region (2, 4), the vehicle being accelerated by applying the torque in the first direction and the vehicle being decelerated by applying the torque in the second direction to the gripping region (2, 4).

7. A handlebar for a vehicle having a control grip according to one of Claims 1 to 6, wherein the attachment region (22) is formed integrally with the handlebar (24) of the vehicle.

8. A land vehicle, water-borne vehicle or aircraft having at least one drive motor and at least one control grip (1) according to one of Claims 1 to 6 and/or a handlebar according to Claim 7, wherein the drive power of the motor is controlled by applying the axial torque to the grip region.

9. A land vehicle, water-borne vehicle or aircraft having at least one braking means and at least one control grip (1) according to one of Claims 1 to 6 and/or a handlebar according to Claim 7, wherein the braking power of the braking means and/or a recuperation is controlled by applying the axial torque to the grip region.

## Revendications

1. Poignée de commande (1) réalisée pour permettre de commander, sur le fondement d'un couple de rotation axial appliqué sur celle-ci, l'accélération et/ ou la vitesse d'un véhicule, comprenant :
- une partie de préhension (2, 4) réalisée pour être saisie par la main d'un utilisateur, et
- une partie de montage (22) réalisée pour permettre de monter la partie de préhension (2, 4) sur un élément du véhicule de sorte qu'elle ne soit pas mobile en rotation axiale,
l'accélération et/ou la vitesse du véhicule dépendant du couple de rotation axiale appliqué par l'utilisateur sur la partie de préhension,
la partie de préhension (2, 4) et la partie de montage (22) étant reliées solidairement l'une à l'autre et la poignée de commande (1) comprenant au moins un élément de mesure (12, 14, 16) réalisé pour permettre de déterminer le couple de rotation axial appliqué par l'utilisateur sur la partie de préhension (2, 4),
**caractérisée en ce que**
l'élément de mesure (12, 14, 16) est monté sur une partie de détection (10) située entre la partie de préhension (2, 4) et la partie de montage (22), la partie de détection (10) étant plus déformable que la partie de préhension (2, 4) et la partie de montage (22).

2. Poignée de commande (1) conforme à la revendication 1,
**caractérisée en ce que**
l'élément de mesure comprend une bande de mesure d'allongement (12, 14, 16).

3. Poignée de commande (1) conforme à la revendication 2,
**caractérisée en ce que**
la partie de détection (10) à une épaisseur de matériau inférieure à celle de la partie de préhension (2, 4) et/ou de la partie de montage (22).

4. Poignée de commande (1) conforme à l'une des revendications précédentes,
**caractérisée en ce que**
la partie de montage (22) et réalisée pour permettre d'être montée de façon non mobile en rotation axiale sur un dispositif de direction (24) du véhicule.

5. Poignée de commande (1) conforme à l'une des revendications 1 à 4,
**caractérisée en ce qu'**
à la poignée de commande (1) est associé un dispositif de commande (30) qui est réalisé pour permettre d'exploiter les signaux de l'élément de mesure (12, 14, 16) de façon à déterminer le couple de rotation axial appliqué par l'utilisateur.

6. Poignée de commande (1) conforme à l'une des revendications 1 à 5,
**caractérisée en ce qu'**
on peut appliquer sur la partie de préhension (2, 4) dans sa position de repos dans laquelle aucun couple de rotation n'est appliqué sur celle-ci, un couple de rotation, axial dans une première direction, et un couple de rotation axial dans une seconde direction opposée à la première direction, le véhicule étant accéléré suite à l'application du couple de rotation dans la première direction et étant décéléré suite à l'application du couple de rotation dans la seconde direction sur la partie de préhension (2, 4).

7. Bras de direction de véhicule comprenant une poignée de commande conforme à l'une des revendications 1 à 6, la partie de montage (22) étant réalisée intégralement avec le bras de direction (24) du véhicule.

8. Véhicule terrestre, véhicule aquatique ou véhicule aérien comprenant au moins un moteur d'entraînement et au moins une poignée de commande (1) conforme à l'une des revendications 1 à 6, et/ou un bras de direction conforme à la revendication 7, l'application du couple de rotation axial sur la partie de préhension permettant de commander la puissance d'entraînement du moteur.

9. Véhicule terrestre, véhicule aquatique ou véhicule aérien comprenant au moins un dispositif de freinage et au moins une poignée de commande (1) conforme à l'une des revendications 1 à 6, et/ou un bras de conforme à la revendication 7, dans lequel l'application du couple de rotation axial, sur la partie de préhension permet de commander la puissance de freinage de l'installation de freinage et/ou une récupération.
